# EUROPÄISCHE PATENTSCHRIFT

(11) **EP 0 961 063 B1**
(45) Veröffentlichungstag und Bekanntmachung des Hinweises auf die Patenterteilung: **29.09.2004**
(21) Anmeldenummer: 99109567.0
(22) Anmeldetag: 14.05.1999
(51) Int. Cl.: F16K 31/60, F16K 35/02

(54) **Wasserarmatur mit wenigstens einer Stellvorrichtung mit Drehgriff**
Valve with at least one actuator with a rotary handle
Robinet à eau avec au moins un dispositif de commande par poignée rotative

(30) Priorität: 28.05.1998 DE 19823801
(43) Veröffentlichungstag der Anmeldung: 01.12.1999
(73) Patentinhaber: Grohe Water Technology AG & Co. KG, 58675 Hemer (DE)
(72) Erfinder: Lobermeier, Hans, 58708 Menden (DE); Philipps-Liebich, Hartwig, 58675 Hemer (DE)

(56) Entgegenhaltungen:
- EP-A- 0 232 454
- EP-A- 0 572 762
- EP-A- 0 605 845
- DE-A- 4 031 207
- US-A- 4 232 817
- US-A- 4 767 052
- US-A- 5 285 997

## Beschreibung

Die Erfindung betrifft eine sanitäre Wasserarmatur mit wenigstens einer Stellvorrichtung zur Einstellung der Durchflußmenge pro Zeiteinheit und/oder des Mischungsverhältnisses von Kalt- und Warmwasser, wobei ein Drehgriff an einem um eine Mittelachse drehbaren Ventilstellglied drehfest angeordnet ist und zur Drehbegrenzung mit einem ortsfest an der Wasserarmatur angeordneten Anschlagkörper über eine entgegen der Kraft einer Rückstellfeder lösbaren Anschlagwippe zusammenwirkt.

Eine derartige Stellvorrichtung ist aus der europäischen Patentschrift Veröffentlichungsnummer 0232454 B1 bekannt. Hierbei ist die Anschlagwippe parallel zur Mittelachse am Mantelbereich des Drehgriffs angeordnet und erstreckt sich über einen erheblichen Bereich der Länge des Drehgriffs, was beispielsweise problematisch bei der Verwendung von besonderen Dekorelementen an dem Drehgriff sein kann.

Der Erfindung liegt die Aufgabe zugrunde, die im Oberbegriff des Anspruchs 1 angegebene Stellvorrichtung zu verbessern und insbesondere die Ausdehnung der Anschlagwippe in axialer Richtung am Drehgriff zu verringern.

Diese Aufgabe wird erfindungsgemäß dadurch gelöst, daß die Anschlagwippe um eine parallel zur Mittelachse am äusseren Mantelbereich des Drehgriffs ausgebildete Achse schwenkbar angeordnet ist, wobei wenigstens eine Radialöffnung am Drehgriff ausgebildet ist, durch die eine Anschlagnase der Anschlagwippe in der Anschlagposition hindurchgreift und eine Drehbegrenzung mit wenigstens einer am Anschlagkörper ausgebildeten Anschlagknagge bewirkt.
Weitere Ausgestaltungen der Erfindung sind in den Ansprüchen 2 bis 11 angegeben.

Die mit der Erfindung erzielbaren Vorteile bestehen insbesondere darin, daß der Platzbedarf der Anschlagwippe im Drehgriff minimiert werden kann. Der Innenraum des Drehgriffs kann nahezu völlig frei von der Anschlagwippe gehalten werden. Dadurch, daß die Anschlagwippe quer zur Längsachse des Drehgriffs angeordnet ist, kann die Länge des Drehgriffs weitgehend variabel gestaltet werden, so daß die geschmackliche Gestaltung des Drehgriffs im wesentlichen frei erfolgen kann. Auch können Schmuck- oder Dekorelemente an dem Drehgriff wahlweise, entsprechend der jeweiligen Armaturenlinie, in der der Drehgriff eingesetzt werden soll, relativ problemlos integriert werden, da die Anschlagwippe in axialer Richtung des Drehgriffs sich nur über einen kurzen Drehgriffbereich erstreckt.

Ausführungsbeispiele der Erfindung sind in der Zeichnung dargestellt und werden im folgenden näher beschrieben. Es zeigt
- Figur 1: eine zum Teil dargestellte sanitäre Aufputz-Wassermischbatterie in Perspektivansicht mit auseinandergezogener Anschlagwippe;
- Figur 2: den in Figur 1 gezeigten Drehgriff in einer Schnittebene durch die Anschlagwippe, wobei sich die Anschlagwippe in der Anschlagposition befindet;
- Figur 3: den in Figur 2 gezeigten Drehgriff, wobei die Anschlagwippe aus der Anschlagposition herausgeschwenkt ist;
- Figur 4: den Drehgriff gemäß Figur 2 mit einer abgewandelten Anschlagwippe, in der Anschlagposition;
- Figur 5: den in Figur 4 gezeigten Drehgriff mit der aus der Anschlagposition herausgeschwenkten Anschlagwippe;
- Figur 6: die Anschlagausbildung gemäß Figur 2 mit einer abgewandelten Rückstellfeder;
- Figur 7: den in Figur 6 dargestellten Drehgriff mit der aus der Anschlagposition herausgeschwenkten Anschlagwippe.

Der Einfachheit halber sind bei den Ausführungsbeispielen in der Zeichnung gleiche oder entsprechende Elemente mit jeweils gleichen Bezugszeichen versehen.

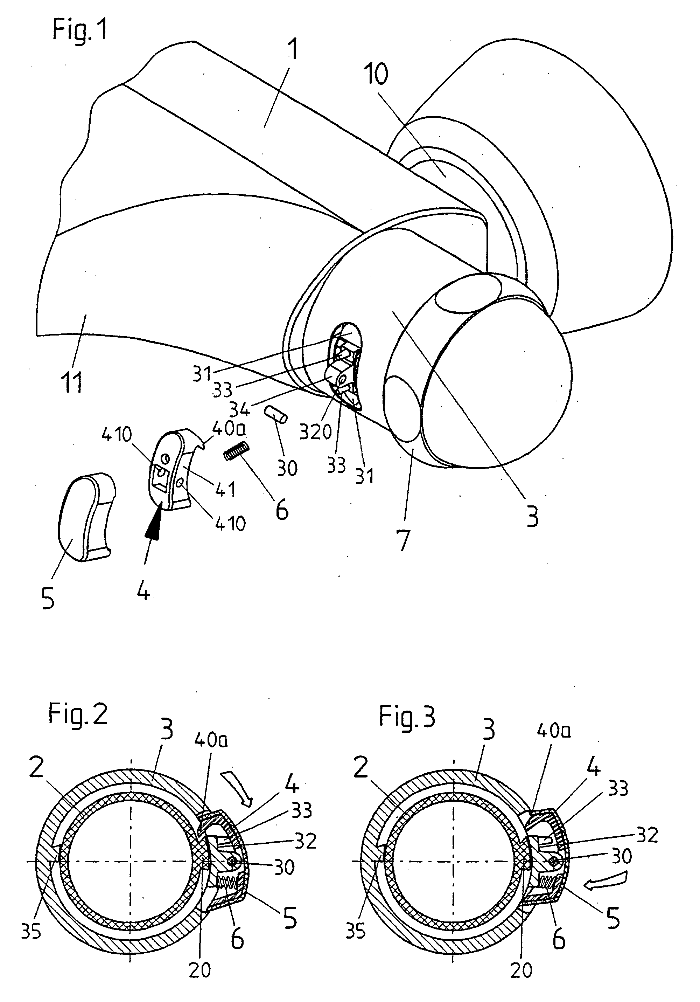

Die in Figur 1 nur mit einem rechten Teilbereich dargestellte Wassermischarmatur besteht aus einem Armaturenkörper 1, an dem an der rechten Seite ein Anschluß 10 für die Verbindung zum Kaltwasserversorgungsleitungsnetz und an der linken Seite - in der Zeichnung nicht dargestellt - ein entsprechender Anschluß für das Warmwasserversorgungsleitungsnetz vorgesehen ist.
An der rechten Stirnseite des Armaturenkörpers 1 ist ein Drehgriff 3 zur Einstellung des Mischungsverhältnisses des zufließenden Kalt- und Warmwassers vorgesehen, während an der linken Stirnseite des Armaturenkörpers 1 - in der Zeichnung nicht dargestellt - ein entsprechender Drehgriff zur Einstellung der Wasserdurchflußmenge pro Zeiteinheit vorgesehen ist, welches über einen Auslauf 11 abgegeben wird. Der Drehgriff 3 ist als zylindrischer Rohrkörper ausgebildet und trägt an der vorstehenden Stirnseite ein Dekorelement 7 mit einer halbkugelförmigen Verschlußkappe. Außerdem trägt der Drehgriff 3 an der Innenwandung einen Anschlag 35 zur Begrenzung des maximalen Drehwinkels.
In der Mantelfläche des Drehgriffs 3 ist ein radial vorstehendes Augenlager 34 angeformt, wobei zu beiden Seiten des Augenlagers 34 Aussenkungen 32 mit jeweils einem parallel zum Augenlager 34 vorstehenden Dorn 33 vorgesehen sind. An den Aussenkungen 32 schließt sich zu beiden Seiten jeweils eine Radialöffnung 31 an. In dem Augenlager 34 ist eine parallel zur Mittelachse des Drehgriffs 3 angeordnete Bohrung 320 vorgesehen, in die eine als Stift ausgebildete Achse 30 einbringbar ist.
Auf das Augenlager 34 ist eine Anschlagwippe 4 mit einer umlaufenden Schürze 41 aufsteckbar, wobei in der Schürze 41 Bohrungen 410 für die Achse 30 ausgebildet sind. Im Bereich der Schürze 41 ist außerdem eine etwa keilförmige Anschlagnase 40a, wie es insbesondere aus Figur 2 und 3 zu entnehmen ist, angeformt. Auf dem Dorn 33 der Aussenkung 32 ist außerdem eine Rückstellfeder 6 angeordnet, die an der inneren Seite der Anschlagwippe 4 abgestützt ist und die Anschlagwippe 4 in die Anschlagposition verschwenkt. Auf der Anschlagwippe 4 ist außerdem von außen eine radial aufrastbare, vorteilhaft aus Metall hergestellte Kappe 5 vorgesehen, wobei die Kappe 5 die Achse 30 in der Stecklage in der Anschlagwippe 4 sichert. Die Halterung der Kappe 5 auf der Anschlagwippe 4 kann auch durch eine Klebung erfolgen.
Die Anschlagwippe 4 und die Kappe 5 sind an der vorstehenden Stirnseite annähernd der zylindrischen Mantelfläche des Drehgriffs 3 gekrümmt ausgebildet. Die Schürze 41 ist im Bereich der Anschlagnase 40a und an der gegenüberliegenden Seite halbrund ausgebildet, wobei die Gesamtausnehmung, bestehend aus den Aussenkungen 32 und den Radialöffnungen 31, im Mantel des Drehgriffs 3 so dimensioniert ist, daß sie im wesentlichen von der Anschlagwippe 4 mit der Kappe 5 abgedeckt wird.

Der Drehgriff 3 ist auf einer Stellvorrichtung - in Figur 1 der Zeichnung vom Drehgriff 3 verdeckt - befestigt, wobei auf der Stellvorrichtung ein drehfest angeordneter hülsenförmiger Anschlagkörper 2 angeordnet ist. Auf dem Außenmantel des Anschlagkörpers 2 ist eine Anschlagknagge 20 radial vorstehend ausgebildet. An dem Drehgriff 3 ist an der Innenwandung ein radial nach innen vorstehender Anschlag 35 ausgebildet, von dem im Hinblick auf eine am Anschlagkörper 2 ausgebildete Anschlagknagge 20 die Drehbewegung des Drehgriffs 3 auf weniger als 360° begrenzt wird. Auf der etwa dem Anschlag 35 gegenüberliegenden Seite des Drehgriffs 3 ist das radial vorstehende Augenlager 34 ausgebildet und trägt die Anschlagwippe 4 mit der Kappe 5. Von der Rückstellfeder 6 wird hierbei die Anschlagwippe 4 in die Anschlagposition verschwenkt, wie es in Figur 2 der Zeichnung dargestellt ist. Die etwa keilförmig ausgebildete Anschlagnase 40a tritt hierbei durch die Radialöffnung 31 in den Innenraum des Drehgriffs 3 ein.

Die Stellvorrichtung hat folgende Funktionsweise: Wird der Drehgriff 3 im Uhrzeigersinn entsprechend dem in Figur 2 gezeigten Pfeil gedreht, so wird das Mischungsverhältnis von Kalt- und Warmwasser so verändert, daß mit fortschreitender Drehbewegung das Mischwasser zunehmend wärmer wird. Bei einer bestimmten Mischwassertemperatur, meist 37°C, gelangt die keilförmig ausgebildete Anschlagnase 40a an die etwa schwalbenschwanzförmig im Querschnitt gestaltete Seitenfläche der Anschlagknagge 20 zur Anlage und verhindert ein weiteres Drehen im Uhrzeigersinn, so daß ein unbeabsichtigtes Weiterdrehen in Richtung des Heißwasserbereichs (Verbrühungsgefahr) unterbunden wird. Erst wenn der Benutzer die Anschlagwippe 4 entgegen der Kraft der Rückstellfeder 6 verschwenkt, wie es in Figur 3 mit dem Pfeil dargestellt ist, läßt sich der Drehgriff weiter in den Heißwasserbereich drehen. Sobald die Anschlagnase 40a an der Anschlagfläche der Anschlagknagge 20 vorbeibewegt ist, kann der Benutzer die Anschlagwippe 4 loslassen, so daß die Rückstellfeder 6 die Anschlagwippe 4 mit der Anschlagnase 40a in ihre Anschlagposition zurückführen kann. Damit ein problemloses Zurückdrehen des Drehgriffs 3 aus der Heißwasserstellung in die Kaltwasserstellung ermöglicht ist, ist die Anschlagnase 40a an der Rückseite einer Schrägfläche ausgebildet, so daß die Anschlagwippe 4 beim Zurückdrehen aus der Heißwasserstellung von der Anschlagknagge 20 entsprechend radial federnd ausgelenkt wird.

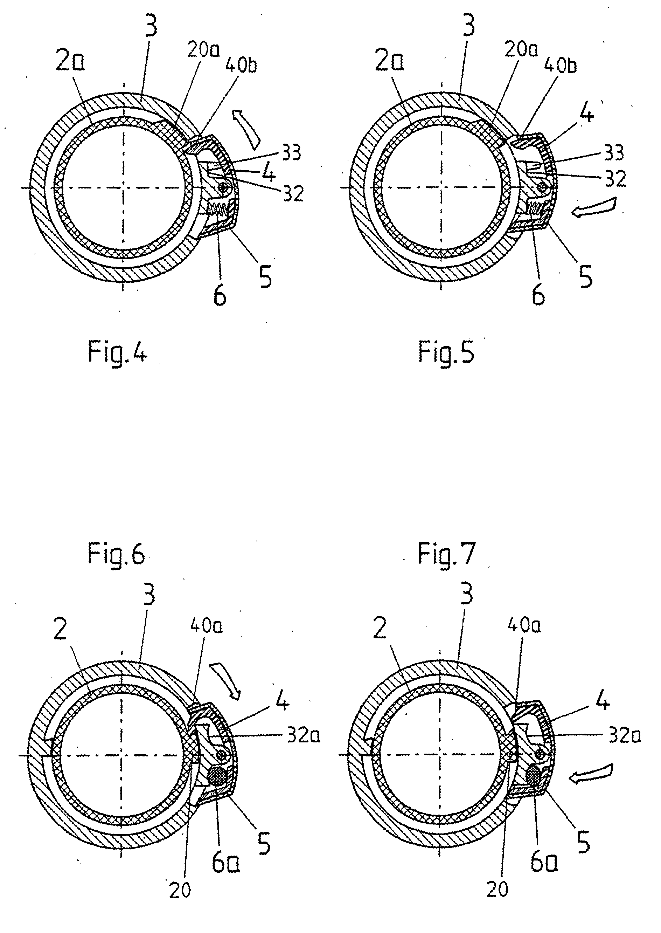

In Figur 4 und 5 ist eine abgewandelte Ausbildung der Anschlagwippe 4 dargestellt. Der Drehgriff 3 entspricht dabei der Ausbildung gemäß Figur 2 und 3. Der Drehgriff 3 ist hierbei jedoch für die an der linken Seite des Armaturenkörpers ausgebildeten Durchflußmengensteuerung (in Figur 1 nicht dargestellt) vorgesehen. Der Drehgriff wird daher von der Absperrstellung ausgehend, entgegen dem Uhrzeigersinn, entsprechend dem in Figur 4 gezeigten Pfeil von der Absperrstellung zunehmend in die voll geöffnete Stellung bewegt. Bei dieser Drehgriffausbildung ist ein Anschlagkörper 2a vorgesehen, an dem eine Anschlagknagge 20a ausgebildet ist. Die Anschlagknagge 20a hat zwei etwa auf dem Durchmesser zu dem zylindrischen Drehgriff 3 angeordnete Anschlagflächen. An der Anschlagwippe 4 ist eine entsprechend der Anschlagfläche ausgebildete Anschlagnase 40b angeformt, die in der Anschlagposition durch eine der Radialöffnungen 31 in den Innenraum des Drehgriffs 3 einfaßt. Damit der Drehgriff 3 sowohl an der linken als auch an der rechten Seite des Armaturenkörpers 1 eingesetzt werden kann, sind zu beiden Seiten des Augenlagers 34 die Aussenkungen 32 mit einem Dorn 33 ausgebildet, so daß eine spiegelbildliche Anordnung des Drehgriffs am Armaturenkörper ermöglicht wird, d.h. die Anschlagwippe 4 kann jeweils um 180° gedreht auf dem Augenlager 34 angeordnet werden.
Wird der Drehgriff 3, von der Absperrposition ausgehend, entgegen dem Uhrzeigersinn in Richtung des in Figur 4 gezeigten Pfeils gedreht, so wird die Öffnungsdrehbewegung von der Anschlagknagge 20a begrenzt. Es läßt sich somit nur eine gedrosselte Wasserausflußmenge einstellen. Soll die maximale Wasserausflußmenge eingestellt werden, so ist, wie es aus Figur 5 zu entnehmen ist, die Anschlagwippe 4 entgegen der Kraft der Rückstellfeder 6 in Pfeilrichtung zu verschwenken, bis der Drehgriff 3 weiter in Öffnungsrichtung gedreht werden kann. Danach kann die Anschlagwippe 4 wieder losgelassen werden, so daß die Rückstellfeder 6 die Anschlagwippe 4 mit der Anschlagnase 40b wieder in die Anschlagposition verschwenken kann. Soll von der voll geöffneten Durchflußposition der Drehgriff wieder in die Absperrstellung bewegt werden, so wird die Anschlagwippe 4 von einer an der Rückseite der Anschlagnase 40b ausgebildeten Schrägfläche im Bereich der Anschlagknagge 20a entsprechend radial ausgelenkt, so daß eine besondere Betätigung der Anschlagwippe 4 durch den Benutzer beim Absperrvorgang nicht erforderlich ist.
Bei den vorstehend beschriebenen Ausführungsbeispielen ist die Rückstellfeder als Schraubenfeder ausgebildet. Alternativ kann die Rückstellfeder 6a auch als Gummifeder ausgebildet sein, wobei die Gummifeder eine zylindrische oder kugelförmige Mantelfläche aufweisen kann, wie es in Figur 6 und 7 der Zeichnung dargestellt ist. Die Aussenkung 32a zu beiden Seiten des Augenlagers 34 ist hierbei entsprechend zylindrisch oder kugelförmig ausgeformt. Die in Figur 6 und 7 gezeigte Ausbildung entspricht im übrigen der in Figur 2 und 3 beschriebenen.

## Patentansprüche

1. Sanitäre Wasserarmatur mit wenigstens einer Stellvorrichtung zur Einstellung der Durchflußmenge pro Zeiteinheit und/oder des Mischungsverhältnisses von Kalt- und Warmwasser, wobei ein Drehgriff (3) an einem um eine Mittelachse drehbaren Ventilstellglied drehfest angeordnet ist und zur Drehbegrenzung mit einem ortsfest an der Wasserarmatur angeordneten Anschlagkörper (2, 2a) über eine entgegen der Kraft einer Rückstellfeder (6, 6a) lösbaren Anschlagwippe (4) zusammenwirkt, **dadurch gekennzeichnet, daß** die Anschlagwippe (4) um eine parallel zur Mittelachse am äusseren Mantelbereich des Drehgriffs (3) ausgebildete Achse (30) schwenkbar angeordnet ist, wobei wenigstens eine Radialöffnung (31) im Drehgriff (3) ausgebildet ist, durch die eine Anschlagnase (40a,40b) der Anschlagwippe (4) in der Anschlagposition hindurchgreift und eine Drehbegrenzung mit wenigstens einer am Anschlagkörper (2,2a) ausgebildeten Anschlagknagge (20, 20a) bewirkt.

2. Wasserarmatur nach Anspruch 1, **dadurch gekennzeichnet, daß** zu beiden Seiten der Achse (30) jeweils eine Radialöffnung (31) ausgebildet ist, so daß die Anschlagwippe (4) mit der Anschlagnase (40a,40b) wahlweise durch eine der beiden Radialöffnungen (31) in der Anschlagposition hindurchgreift.

3. Wasserarmatur nach Anspruch 1 oder 2, **dadurch gekennzeichnet, daß** die Achse (30) von einem radial vorstehenden Augenlager (34) am Drehgriff (3) gehalten ist, wobei die Anschlagwippe (4) das Augenlager (34) mit einer Schürze (41) seitlich umgreift.

4. Wasserarmatur nach einem der Ansprüche 1 bis 3, **dadurch gekennzeichnet, daß** die vorstehende, für die Betätigung vorgesehene Stirnseite der Anschlagwippe (4) etwa entsprechend dem Außenmantel des Drehgriffs (3) gekrümmt ausgebildet ist.

5. Wasserarmatur nach einem der Ansprüche 1 bis 4, **dadurch gekennzeichnet, daß** die Achse (30) als Stift ausgebildet ist, welcher seitlich durch Bohrungen (410) in der Schürze (41) in eine Bohrung (320) des Augenlagers (34) einschiebbar ist, wobei zur Sicherung des Stiftes in der Stecklage eine topfartige Kappe (5) auf die Anschlagwippe (4) aufrastbar ist.

6. Wasserarmatur nach Anspruch 5, **dadurch gekennzeichnet, daß** die Kappe (5) auf der Anschlagwippe (4) in der Stecklage aufgeklebt ist.

7. Wasserarmatur nach einem der Ansprüche 3 bis 6, **dadurch gekennzeichnet, daß** parallel zur Achse (30) zu beiden Seiten des Augenlagers (34) eine Aussenkung (32,32a) zur Aufnahme der Rückstellfeder (6,6a) ausgebildet ist, die sich einerseits im Grund der Aussenkung (32,32a) und andererseits an einer Innenseite der Anschlagwippe (4) abstützt.

8. Wasserarmatur nach Anspruch 7, **dadurch gekennzeichnet, daß** als Rückstellfeder (6) eine Schraubenfeder vorgesehen ist, die von einem vom Grund der Aussenkung (32) vorstehenden Dorn (33) in der Steckposition gehalten ist.

9. Wasserarmatur nach Anspruch 7, **dadurch gekennzeichnet, daß** als Rückstellfeder (6a) eine zylindrische oder kugelförmige Gummifeder vorgesehen ist, wobei zur Halterung in der Steckposition der Grund der Aussenkung (32a) eine entsprechend zylindrische oder kugelförmige Wandung aufweist.

10. Wasserarmatur nach einem der Ansprüche 7 bis 9, **dadurch gekennzeichnet, daß** das Augenlager (34) einstückig an dem Drehgriff (3) ausgebildet ist, wobei vorzugsweise die von den Aussenkungen (32,32a) und den Radialöffnungen (31) gebildete Ausnehmung im Mantel des Drehgriffs (3) so ausgebildet ist, daß sie im wesentlichen von der Anschlagwippe (4) oder der Kappe (5) verdeckt wird.

11. Wasserarmatur nach wenigstens einem der Ansprüche 1 bis 10, **dadurch gekennzeichnet, daß** der Drehgriff (3) entsprechend dem Einsatz der Stellvorrichtung wahlweise mit Anschlagwippen (4) mit unterschiedlich gestalteten Anschlagnasen (40a,40b) bestückbar ist.

## Claims

1. Sanitary water fitting having at least one control device for adjusting the flow rate per unit of time and/or the mixture ratio of cold and hot water, wherein a rotatable control (3) is arranged, without permitting relative rotation, on a valve control member rotatable about a centre line, and to limit rotation co-operates, by way of a rocker stop (4) releasable against the force of a restoring spring (6, 6a), with a stop member (2, 2a) arranged immovably on the water fitting, **characterised in that** the rocker stop (4) is arranged to pivot about an axle (30) formed parallel to the centre line at the outer surface region of the rotatable control (3), wherein at least one radial opening (31) is formed in the rotatable control (3), through which a stop projection (40a, 40b) of the rocker stop (40) engages in the stop position and limits rotation with at least one stop catch (20, 20a) formed on the stop member (2, 2a).

2. Water fitting according to claim 1, **characterised in that** on each side of the axle (30) there is a radial opening (31), so that the rocker stop (4) engages with the stop projection (40, 40b) through either one or the other of the two radial openings (31) in the stop position.

3. Water fitting according to claim 1 or 2, **characterised in that** the axle (30) is held by a radially protruding eye bearing (34) on the rotatable control (3), the rocker stop (4) engaging laterally around the eye bearing (34) with a cover (41).

4. Water fitting according to any one of claims 1 to 3, **characterised in that** the protruding end face of the rocker stop (4) provided for actuation is of curved construction approximately corresponding to the outer surface of the rotatable control (3).

5. Water fitting according to any one of claims 1 to 4, **characterised in that** the axle (30) is in the form of a pin that is insertable laterally through bores (410) in the cover (41) into a bore (320) of the eye bearing, wherein to secure the pin in the mounted position a cup-shaped cap (5) can be snapped onto the rocker stop (4).

6. Water fitting according to claim 5, **characterised in that** the cap (5) is adhesively secured to the rocker stop (4) in the mounted position.

7. Water fitting according to any one of claims 3 to 6, **characterised in that** parallel to the axle (30) on both sides of the eye bearing (34) a recess (32, 32a) for receiving the restoring spring (6, 6a) is formed, the spring being supported at one end at the base of the recess (32,32a) and at the other end against an inner side of the rocker stop (4).

8. Water fitting according to claim 7, **characterised in that** a helical spring is provided as restoring spring (6), which is held in the mounted position by a pin (30) projecting from the base of the recess (32).

9. Water fitting according to claim 7, **characterised in that** a cylindrical or spherical rubber spring is provide as restoring spring (6), the base of the recess (32a) having a correspondingly cylindrical or spherical wall to hold the spring in the mounted position.

10. Water fitting according to any one of claims 7 to 9, **characterised in that** the eye bearing (34) is constructed in one piece on the rotatable control (3), wherein the aperture formed by the recesses (32, 32a) and by the radial openings (31) in the casing of the rotatable control (3) is preferably constructed so that it is substantially masked by the rocker stop (4) or the cap (5).

11. Water fitting according to at least one of claims 1 to 10, **characterised in that** the rotatable control (3) is optionally provided with rocker stops (4) having differently configured stop projections (40a, 40b) corresponding to the application of the control device.

## Revendications

1. Robinet d'eau sanitaire comprenant au moins un dispositif de commande pour le réglage de la quantité écoulée par unité de temps et/ou du rapport de mélange entre l'eau froide et l'eau chaude, dans lequel une poignée tournante (3) est montée solidairement en rotation sur un organe de commande de robinet qu'on peut faire tourner autour d'un axe médian et qui, pour la limitation de la rotation, coopère avec un corps de butée (2, 2a) disposé en position fixe sur l'appareil de robinetterie hydraulique, par l'intermédiaire d'une bascule de butée (4) qui peut être libérée à l'encontre de la force d'un ressort de rappel (6, 6a),
**caractérisé en ce que**
la bascule de butée (4) est montée pour pouvoir pivoter autour d'un axe (30) formé parallèlement à l'axe médian sur la région de paroi extérieure de la poignée tournante (3), alors que, dans la poignée tournante (3), est formée au moins une ouverture radiale (31) à travers laquelle une dent de butée (40a, 40b) de la bascule de butée (4) est engagée dans la position de butée et réalise une limitation de la rotation avec au moins un taquet de butée (20, 20a) formé sur le corps de butée (2, 2a).

2. Robinet d'eau selon la revendication 1,
**caractérisé en ce qu'**
une ouverture radiale (31) est formée sur chacun des deux côtés de l'axe (30), de telle sorte que la bascule de butée (4) est engagée, par la dent de butée (40a, 40b) au choix à travers une des deux ouvertures radiales (31) dans la position de butée.

3. Robinet d'eau hydraulique selon la revendication 1 ou 2,
**caractérisé en ce que**
l'axe (30) est tenu à la poignée tournante (3) par une patte d'articulation (34) en saillie radiale, la bascule de butée (4) entourant latéralement la patte d'articulation (34) par une jupe (41).

4. Robinet d'eau selon une des revendications 1 à 3,
**caractérisé en ce que**
la face frontale saillante de la bascule de butée (4) qui est prévue pour l'actionnement est d'une forme courbe qui correspond à peu près à la paroi extérieure de la poignée tournante (3).

5. Robinet d'eau selon une des revendications 1 à 4,
**caractérisé en ce que**
l'axe (30) est constitué par une tige qui peut être emmanchée latéralement dans un perçage (320) de la patte d'articulation (34) à travers des perçages (410) de la jupe (41), et un capuchon (5) en forme de godet peut être encliqueté sur la bascule de butée (4) pour immobiliser la tige dans la position emmanchée.

6. Robinet d'eau selon la revendication 5,
**caractérisé en ce que**
le capuchon (5) est collé sur la bascule de butée (4) dans la position emmanchée.

7. Robinet d'eau selon une des revendications 3 à 6,
**caractérisé en ce que**
parallèlement à l'axe (30), est formée, sur chacun des deux côtés de la patte d'articulation (34), une dépression (32, 32a) destinée à recevoir le ressort de rappel (6, 6a), lequel s'appuie, d'un côté, dans le fond de la dépression (32, 32a) et, de l'autre côté, contre une face intérieure de la bascule de butée (4).

8. Robinet d'eau selon la revendication 7,
**caractérisé en ce qu'**
il est prévu comme ressort de rappel (6) un ressort hélicoïdal qui est tenu dans la position d'emmanchement par un ergot (33) qui fait saillie sur le fond de la dépression (32).

9. Robinet d'eau selon la revendication 7,
**caractérisé en ce que**
le ressort de rappel (6a) est un ressort en caoutchouc cylindrique ou sphérique, alors que pour le maintien dans la position emmanchée, le fond de la dépression (32a) présente une paroi de forme cylindrique ou sphérique correspondante.

10. Robinet d'eau selon l'une des revendications 7 à 9,
**caractérisé en ce que**
la patte d'articulation (34) est formée d'une seule pièce sur la poignée tournante (3), l'évidement dans la paroi de la poignée tournante (3) qui est formé par les dépressions (32, 32a) et les ouvertures radiales (31) étant conformé de manière à être sensiblement recouvert par la bascule de butée (4) ou par le capuchon (5).

11. Robinet d'eau selon au moins une des revendications 1 à 10,
**caractérisé en ce que**
selon l'utilisation du dispositif de commande, la poignée tournante (3) peut être équipée au choix avec des bascules de butée (4) portant des dents de butée (40a, 40b) de réalisations différentes.
